# EUROPEAN PATENT SPECIFICATION

(11) **EP 3 598 000 B1**
(45) Date of publication and mention of the grant of the patent: **28.04.2021**
(21) Application number: 18290085.2
(22) Date of filing: 20.07.2018
(51) Int. Cl.: F23D 14/14, F26B 13/10, F26B 3/30, F23D 14/02

(54) **GAS FIRED RADIANT EMITTER COMPRISING A RADIANT SCREEN**
GASBEFEUERTER STRAHLUNGSEMITTER MIT EINEM STRAHLUNGSSCHIRM
ÉMETTEUR RADIANT À GAZ COMPRENANT UN ÉCRAN RADIANT

(43) Date of publication of application: 22.01.2020
(73) Proprietor: Solaronics, 59280 Armentiéres (FR)
(72) Inventor: Even, Nicolas, 62840 Laventie (FR); Farinha, James, 59270 Stazeele (FR); Verheyde, Eddy, 59320 Ennetières en Weppes (FR)
(74) Representative: Cabinet Beau de Loménie

(56) References cited:
- EP-A1- 0 628 146
- EP-A1- 1 476 697
- DE-A1-102008 000 678

## Description

### Technical Field

The invention relates to gas fired radiant emitters as are used for heating continuously moving substrates such as paper, board or metal strip. The gas fired radiant emitter of the invention comprises an improved radiant screen.

### Background Art

Gas fired radiant emitters comprising a ceramic burner plate and one or two radiant screens distanced from the ceramic burner plate are known. Typically, parallel ceramic bars or woven wire mesh screens are used as radiant screen. WO2010/003904A1 shows an example of such gas fired radiant emitter.

US3,847,536 discloses a gas fired radiant emitter comprising a perforated metal radiant screen and a more distant screen made of woven refractory metal wire. EP 1 476 697 A1 relates to an emitting body of an infra-red emitters. In figures 8 to 12, embodiments are illustrated in cross section, in which the radiant element is built up from at least two layers of strips located above one another. In operation, the strips of the two layers assume different emission temperatures, which increases the efficiency considerably. One preferred area of application is the drying of moving board or paper webs in paper mills, for example downstream of coating apparatus.

### Disclosure of Invention

The first aspect of the invention is a gas fired radiant emitter. The gas fired radiant emitter comprises a burner deck onto which premix gas is combusted when the emitter is in use; and a metal plate provided at the combustion side of the burner deck. The metal plate is provided to act as radiant screen when the emitter is in use. The metal plate is at least over part of its surface - and preferably over its full surface - spaced from the burner deck. The metal plate comprises a plurality of elongated slots for passage through the metal plate of flue gas generated on the burner deck. The plurality of elongated slots comprise a first elongated slot. The first elongated slot has a first tangent along a position along the length of the first elongated slot. The plurality of elongated slots comprise a second elongated slot. The second elongated slot has a second tangent along a position along the length of the second elongated slot. The angle between the first tangent and the second tangent is between 45° and 135°, preferably between 75° and 105°. With first and second elongated slots is not meant a numbering order, but to differentiate two different elongated slots. With first tangent and second tangent is not meant a numbering order of any kind, but to differentiate the tangent one from the other for the explanation of the invention.

The slots on the metal plate create interruptions to the conduction of heat over the surface of the metal plate. Therefore, the borders of the metal plate are cooler. Consequently, a more simple way of fixation of the metal plate into the gas fired radiant emitter can be used. Less or even no insulation material is required in this fixation. As the borders of the metal plate are cooler, less heat is lost via conduction through the fixation of the metal plate, resulting in a higher efficiency of the radiant emitter.

It is a further benefit that the percentage of perforated area of the metal plate can be designed, by the selection and positioning of the elongated slots. The percentage of perforated area of the metal plate can be designed to be low, for high efficiency of radiation of the metal plate. The percentage of perforated area can also be optimized as a function of the power (in kW/m² of surface area) of the emitter.

Preferably, a plurality of the plurality of the elongated slots have the same shape and length as the first elongated slot; and a plurality of the plurality of elongated slots have the same shape and length as the second elongated slot.

Preferably, the plurality of elongated slots comprises a third elongated slot. The third elongated slot has a third tangent along a position along its length. The plurality of elongated slots comprises a fourth elongated slot. The fourth elongated slot has a fourth tangent along a position along its length. The angle between the third tangent and the fourth tangent is between 45° and 135°, preferably between 75° and 105°. The third elongated slot differs in shape and/or in length from the first and the second elongated slot. The fourth elongated slot differs in shape and/or in length from the first, the second and the third elongated slot. Preferably, a plurality of the plurality of the elongated slots have the same shape and length as the third elongated slot; and a plurality of the plurality of elongated slots have the same shape and length as the fourth elongated slot. With third and fourth elongated slots is not meant a numbering order, but to differentiate two different elongated slots. With third tangent and fourth tangent is not meant a numbering order of any kind, but to differentiate the tangent one from the other for the explanation of the invention.

Preferably, at least part of the elongated slots are selected from one or more of U-shape, L-shape or a continuously bent shape.

Preferably, at least part of the elongated slots have a shape such that the shape has an opening. A plurality of the elongated slots are arranged such that the opening of the shape of an elongated slot of the plurality of the elongated slots faces the opening of the shape of an immediately neighbouring elongated slot of the plurality of the elongated slots.

In a preferred embodiment of the invention, the metal plate comprises at its centre a rectangle of at least 7% - and preferably at least 10% - of the surface of the burner deck. The percentage of open area of the rectangle is less than the average of the percentage of open area of the metal plate outside the rectangle. When the gas fired radiant emitter is in use, the metal plate is hotter at its central section than outside its central section. The smaller percentage of open area of the rectangle provided in the centre of the metal plate provides the benefit that the metal plate is better able to cope with the stresses caused by the thermal expansion of the metal. This way, formation of cracks in the central section of the metal plate are more efficiently prevented, resulting in a radiant emitter of long lifetime.

Preferably, the total open area of the elongated slots of the metal plate is less than 12% of the surface of the metal plate. With open area is meant the accumulated area of the elongated slots of the metal plate. The invention allows to use a radiant screen with low perforated (or open) area, which is beneficial for the radiant efficiency of the radiant screen.

Preferably, the radiant screen comprises a coating to increase its radiation emissivity and/or to increase its thermal conductivity.

In a preferred embodiment, the metal plate is flat.

In a preferred embodiment, the metal plate is bent. More preferably, the metal plate has a rectangular shape and the metal plate is flat in its middle section and bent at two of the sides of the rectangular shape.

Preferably, the burner deck comprises a ceramic burner plate comprising a plurality of perforations for flow of premix gas; or the burner deck comprises metal fibers or a metal wire mesh.

In a preferred embodiment, the burner deck comprises two ceramic plates positioned next to each other, preferably with a joint in between.

Preferably, the fixation of the metal plate into the gas fired radiant emitter is such that the metal plate is fixed with play relative to the fixation parts. This way, thermal expansion and retraction is possible of the metal plate. Such embodiments provide emitters with longer lifetime.

Preferably, the metal plate is retained into the radiant emitter by one or a plurality of retainer bars positioned over and/or below and/or through the metal plate. More preferably, ends of the one or a plurality of retainer bars are positioned through slots in retainer elements of the frame of the radiant emitter. More preferably, the one or a plurality of retainer bars contain a hook. The hook grabs through slots in the metal plate to support the bars in retaining the metal plate into the radiant emitter. Preferably, the metal plate comprises retainer slots along two of its sides. The retainer elements of the frame of the radiant emitter are slid through the retainer slots of the metal plate or one or a plurality of retainer bars are slid through the retainer slots. Such embodiments provide emitters that are easy to assemble and that have a long lifetime. In such embodiments, thermal expansion and retraction of the metal plate is possible.

Preferably, the burner deck has a rectangular shape with two parallel long sides and two parallel shorter sides. More preferably, along the long sides, open areas are provided between the burner deck and the metal plate such that flue gas can flow out between the burner deck and the metal plate. Such emitters can be made cheaper, as less parts are required and assembly is facilitated. When such emitters are positioned in a heat treatment installation in a row of emitters, with the long sides of the burner deck parallel and next to each other, further benefits are obtained. There is reduced discontinuity between neighbour emitters resulting in a more uniform emission of radiation from the row of emitters. Furthermore, ignition and flame propagation over the row of emitters is facilitated. More preferably, insulating elements are positioned along the short sides between the burner deck and the metal plate. A sealing element can be provided along the short sides such that no flue gas produced by the burner deck can flow out at the short side between the burner deck and the metal plate. As in such embodiments no flue gas can flow out along the short sides, no heat is lost along the short sides, resulting in an emitter with increased efficiency. The sealing element can be provide by a plurality - e.g. a plurality of layers - of metal elements. Preferably, the metal elements have the ability to move. The metal elements can be mounted via a hooks and slots.

The metal plate of a preferred embodiment comprises a section with increased porosity compared to outside this section. With porosity is meant the surface of the elongated slots in a section of the metal plate as a percentage of the surface of that section. At the non-combustion side of the metal plate, an ignition device or a sensor is provided at the section with increased porosity. Preferably, the section with increased porosity is provided within a circular area having less than 3.5 cm diameter. When an ignition device is provided at this section of the metal plate, ignition of the gas fired radiant emitter is facilitated. When a sensor is provided at the section with increased porosity, flame sensing - flame detection of flame quality control - is facilitated.

The second aspect of the invention is an apparatus for the heat treatment of continuously moving strip material. Examples of such heat treatment are drying and curing, e.g. of coatings applied on continuously moving strip material. The strip material can e.g. be paper, board or metal strip. The apparatus comprises a plurality of gas fired radiant emitters as in any embodiments of the first aspect of the invention. The gas fired radiant emitters are provided for heat treatment by IR-radiation of the continuously moving strip material.

Preferably, a plurality of gas fired radiant emitters are installed parallel to each other over the width of the apparatus for treatment of moving strip material; with the long sides of the burner decks aligned with the direction of movement of the strip material; and with a small slot between the long sides of neighbouring metal plates. There is reduced discontinuity between neighbour emitters resulting in a more uniform emission of radiation from the apparatus for heat treatment. Furthermore, ignition and flame propagation over the row of emitters is facilitated thanks to the open area between the burner decks and the metal plates of the emitters.

### Brief Description of Figures in the Drawings

Figure 1 shows a gas fired radiant emitter according to the invention.
Figure 2 shows a metal plate which can be used in emitters according to the invention for acting as radiant screen.
Figure 3 shows an example of an apparatus according to the second aspect of the invention.
Figure 4 shows a gas fired radiant emitter according to the invention.

### Mode(s) for Carrying Out the Invention

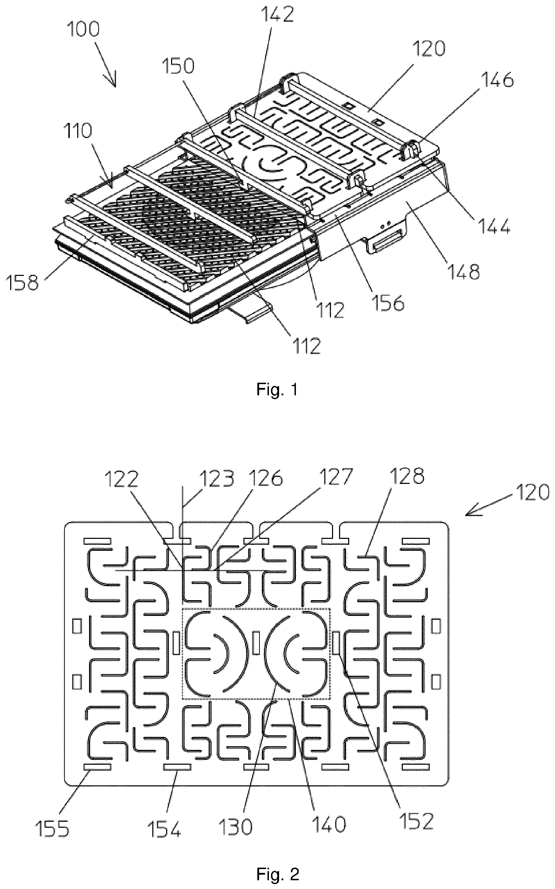

Figure 1 shows an example of a gas fired radiant emitter 100 according to the invention. The gas fired radiant emitter comprises a burner deck 110 onto which premix gas is combusted when the emitter is in use; and a flat metal plate 120 provided at the combustion side of the burner deck. In figure 1, the metal plate is taken away over half of the burner deck, to illustrate the different parts of the gas fired radiant emitter. The metal plate is spaced from the burner deck. The metal plate is shown in full in figure 2.

The burner deck comprises two ceramic burner plates 112 each comprising a plurality of perforations for flow of premix gas. The two ceramic plates are positioned next to each other with a joint in between. When the emitter is in use, premix gas flows from the back of the burner plates, through its perforations, to be combusted on the burner plates at the side where the metal plate is provided. The metal plate will become hot by radiation from the burner plates and by the flue gas flow. The metal plate is provided to act as radiant screen: it will radiate heat to the object to be heated.

The metal plate 120 (see figures 1 and 2) comprises a plurality of elongated slots 122, 126, 128, 130 for passage through the metal plate of flue gas generated on the burner deck. Part of the elongated slots have a U-shape (122, 126), L-shape (128) or a continuously bent shape (130).

The plurality of elongated slots comprise a first elongated slot 122. The first elongated slot has a first tangent 123 along a position along the length of the first elongated slot. The plurality of elongated slots comprise a second elongated slot 126. The second elongated slot has a second tangent 127 along a position along the length of the second elongated slot. The angle between the first tangent and the second tangent is 90°. A plurality of the plurality of the elongated slots have the same shape and length as the first elongated slot. A plurality of the plurality of elongated slots have the same shape and length as the second elongated slot.

A plurality of the elongated slots are arranged such that the opening of the shape of an elongated slot faces the opening of the shape of an immediately neighbouring elongated slot of the plurality of the elongated slots, see e.g. elongated slots 122 and 126.

The metal plate comprises in the central rectangle - in figure 2 indicated with dashed lines 140 - having 14% of the surface of the burner deck a percentage of open area of the rectangle less than the average of the percentage of open area of the metal plate outside the rectangle.

The total open area of the elongated slots of the metal plate is 8%. With open area is meant the accumulated area of the elongated slots of the metal plate. The invention allows to use a radiant screen with low perforated (or open) area, which is beneficial for the radiant efficiency of the radiant screen.

The metal plate is retained into the radiant emitter by a plurality of retainer bars 142 positioned over the metal plate. Ends of the retainer bars are positioned through slots 144 in retainer elements 146 of the frame 148 of the radiant emitter. The retainer bars contain a hook 150, which grabs through slots 152 in the metal plate to support the bars in retaining the metal plate into the radiant emitter. The metal plate comprises retainer slots 154 along two of its sides. The retainer elements 146 of the frame of the radiant emitter are slid through the retainer slots of the metal plate. This way, the emitter can be easily assembled and has a long lifetime, as the fixation of the metal plate into the gas fired radiant emitter is such that the metal plate is fixed with play. Thermal expansion and retraction is possible of the metal plate relative to the fixation parts.

The burner deck can comprise retainer slots 155, which are larger than the other retainer slots 154. The larger retainer slots 155 can contribute to the holding of an insulating element 158 (e.g. a U-shaped insulating element) at the short side of the rectangular gas fired radiant emitter. A benefit is easy assembly of the insulation in the gas fired radiant emitter.

The burner deck has a rectangular shape with two parallel long sides and two parallel shorter sides. Along the long sides, open areas 156 are provided between the burner deck and the metal plate such that flue gas can flow out between the burner deck and the metal plate. Insulating elements 158 are positioned along the short sides between the burner deck and the metal plate. A sealing element is provided along the short sides such that no flue gas produced by the burner deck can flow out at the short side between the burner deck and the metal plate.

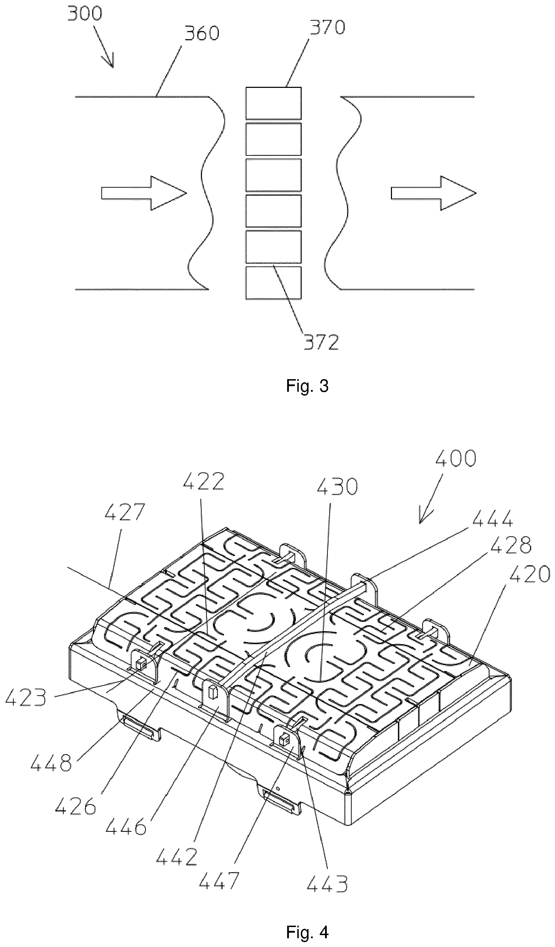

Figure 3 shows an example of an apparatus 300 according to the second aspect of the invention. The apparatus is provided for the heat treatment of continuously moving strip material 360. The apparatus is equipped with a plurality of gas fired radiant emitters 370 according to the invention. The gas fired radiant emitters heat the bottom of the moving strip material via infrared radiation. In order to show the emitters, part of the continuously moving strip material is cut away in figure 3. The plurality of gas fired radiant emitters are installed parallel to each other over the width of the apparatus for treatment of moving strip material. The long sides of the burner decks are aligned with the direction of movement of the strip material. Small slots 372 are provided between the long sides of neighbouring metal plates.

Figure 4 shows an example of a gas fired radiant emitter 400 according to the invention. The gas fired radiant emitter comprises a burner deck (not visible in figure 4, but similar to the burner deck of the gas fired radiant emitter of figure 1) onto which premix gas is combusted when the emitter is in use; and a metal plate 420 provided at the combustion side of the burner deck. The metal plate has a rectangular shape. The metal plate is flat in its middle section and bent at two of the sides of the rectangular shape. The metal plate is provided to act as radiant screen: it will radiate heat to the object to be heated.

The metal plate 420 comprises a plurality of elongated slots 422, 426, 428, 430 for passage through the metal plate of flue gas generated on the burner deck. Part of the elongated slots have a U-shape (422, 426), L-shape (428) or a continuously bent shape (130)

The plurality of elongated slots comprise a first elongated slot 422. The first elongated slot has a first tangent 423 along a position along the length of the first elongated slot. The plurality of elongated slots comprise a second elongated slot 426. The second elongated slot has a second tangent 427 along a position along the length of the second elongated slot. The angle between the first tangent and the second tangent is 90°. A plurality of the plurality of the elongated slots have the same shape and length as the first elongated slot. A plurality of the plurality of elongated slots have the same shape and length as the second elongated slot.

A plurality of the elongated slots are arranged such that the opening of the shape of an elongated slot faces the opening of the shape of an immediately neighbouring elongated slot of the plurality of the elongated slots, see e.g. elongated slots 122 and 126.

The total open area of the elongated slots of the metal plate is 8%. With open area is meant the accumulated area of the elongated slots of the metal plate. The invention allows to use a radiant screen with low perforated (or open) area, which is beneficial for the radiant efficiency of the radiant screen.

The metal plate is retained into the radiant emitter by a retainer bars 442 positioned over the metal plate. The ends of the retainer bar are positioned through slots 444 in retainer elements 446 of the frame 448 of the radiant emitter. The metal plate is also retained into the radiant emitter by retainer bars 443 slid through retainer slots in the metal plate provided for this purpose; the ends of these retainer bars 443 are slid through slots in retainer elements 447 of the frame 448 of the radiant emitter.

## Claims

1. Gas fired radiant emitter (100, 400), comprising
- a burner deck (110) onto which premix gas is combusted when the emitter is in use; and
- a metal plate (120, 420) provided at the combustion side of the burner deck (110), for acting as radiant screen;
wherein the metal plate (120, 420) is at least over part of its surface - and preferably over its full surface - spaced from the burner deck (110);
wherein the metal plate (120, 420) comprises a plurality of elongated slots (122, 126, 128, 130, 422, 426, 428, 430) for passage through the metal plate (120, 420) of flue gas generated on the burner deck (110);
wherein the plurality of elongated slots (122, 126, 128, 130, 422, 426, 428, 430) comprise a first elongated slot (122, 422), wherein the first elongated slot (122, 422) has a first tangent (123, 423) along a position along its length;
wherein the plurality of elongated slots (122, 126, 128, 130, 422, 426, 428, 430) comprise a second elongated slot (126, 426), wherein the second elongated slot (126, 426) has a second tangent (127,427) along a position along its length;
wherein the angle between the first tangent (123, 423) and the second tangent (127, 427) is between 45° and 135°, preferably between 75° and 105°.

2. Gas fired radiant emitter (100, 400) as in claim 1, wherein at least part of the elongated slots (122, 126, 128, 130, 422, 426, 428, 430) are selected from one or more of U-shape (122, 126, 422, 426), L-shape (128, 428) or a continuously bent shape (130, 430).

3. Gas fired radiant emitter (100, 400) as in any of the preceding claims,
wherein at least part of the elongated slots (122, 126, 128, 130, 422, 426, 428, 430) have a shape such that the shape has an opening,
wherein a plurality of the elongated slots (122, 126, 128, 130, 422, 426, 428, 430) are arranged such that the opening of the shape of an elongated slot of the plurality of the elongated slots (122, 126, 128, 130, 422, 426, 428, 430) faces the opening of the shape of an immediately neighbouring elongated slot of the plurality of the elongated slots (122, 126, 128, 130, 422, 426, 428, 430).

4. Gas fired radiant emitter (100, 400) as in any of the preceding claims,
wherein the metal plate (120, 420) comprises at its centre a rectangle of at least 7% of the surface of the burner deck (110),
wherein the percentage of open area of the rectangle is less than the average of the percentage of open area of the metal plate (120, 420) outside the rectangle.

5. Gas fired radiant emitter (100, 400) as in any of the preceding claims, wherein the total open area of the elongated slots (122, 126, 128, 130, 422, 426, 428, 430) of the metal plate (120, 420) is less than 12% of the surface of the metal plate (120, 420).

6. Gas fired radiant emitter (100, 400) as in any of the preceding claims, wherein the fixation of the metal plate (120, 420) into the gas fired radiant emitter is such that the metal plate (120, 420) is fixed with play relative to the fixation parts.

7. Gas fired radiant emitter (100, 400) as in any of the preceding claims, wherein the burner deck (110) comprises a ceramic burner plate (112) comprising a plurality of perforations for flow of premix gas; or wherein the burner deck (110) comprises metal fibers or a metal wire mesh.

8. Gas fired radiant emitter (100, 400) as in any of the preceding claims, wherein the metal plate (120, 420) is retained into the radiant emitter (100, 400) by one or a plurality of retainer bars (142, 442, 443) positioned over and/or below and/or through the metal plate (120, 420); preferably wherein ends of the one or a plurality of retainer bars (142, 442, 443) are positioned through slots (144, 444) in retainer elements (146, 446, 447) of the frame (148, 448) of the radiant emitter (100, 400).

9. Gas fired radiant emitter (100) as in claim 8, wherein the one or a plurality of retainer bars (142) contain a hook (150), wherein the hook (150) grabs through slots in the metal plate (120) to support the bars in retaining the metal plate (120) into the radiant emitter.

10. Gas fired radiant emitter (100, 400) as in claims 8 or 9; wherein the metal plate (120, 420) comprises retainer slots (154, 155) along two of its sides, wherein the retainer elements (146, 446) of the frame (148, 448) of the radiant emitter (100, 400) are slid through the retainer slots (154, 155) of the metal plate (120, 420); or wherein one or a plurality of retainer bars (443) are slid through the retainer slots (447).

11. Gas fired radiant emitter (100, 400) as in any of the preceding claims, wherein the burner deck (110) has a rectangular shape with two parallel long sides and two parallel shorter sides; preferably wherein along the long sides, open areas are provided between the burner deck (110) and the metal plate (120, 420) such that flue gas can flow out between the burner deck (110) and the metal plate (120, 420).

12. Gas fired radiant emitter (100, 400) as in claim 11, wherein along the short sides an insulating element (158) is positioned between the burner deck (110) and the metal plate (120, 420).

13. Gas fired radiant emitter (100, 400) as in claims 11 or 12, comprising a sealing element along the short sides such that no flue gas produced by the burner deck (110) can flow out at the short side between the burner deck (110) and the metal plate (120, 420).

14. Gas fired radiant emitter (100, 400) as in any of the preceding claims;
wherein the metal plate (120, 420) comprises a section with increased porosity compared to outside this section;
wherein at the non-combustion side of the metal plate (120, 420), an ignition device or a sensor is provided at the section with increased porosity.

15. Apparatus (300) for the heat treatment of continuously moving strip material (360), wherein the apparatus (300) comprises a plurality of gas fired radiant emitters (370) as in any of the preceding claims, wherein the gas fired radiant emitters (370) are provided for heat treatment by IR-radiation of the continuously moving strip material (360).

## Patentansprüche

1. Gasbefeuerter Strahlungsemitter (100, 400), umfassend
- ein Brennerdeck (110), auf dem Vormischgas verbrannt wird, wenn der Emitter in Gebrauch ist, und
- eine Metallplatte (120, 420), die an der Verbrennungsseite des Brennerdecks (110) vorgesehen ist, um als Strahlungsschirm zu fungieren,
wobei die Metallplatte (120,420) zumindest über einen Teil ihrer Oberfläche - und vorzugsweise über ihre gesamte Oberfläche - von dem Brennerdeck (110) beabstandet ist,
wobei die Metallplatte (120, 420) mehrere längliche Schlitze (122, 126, 128, 130, 422, 426, 428, 430) für einen Durchgang von an dem Brennerdeck (110) erzeugtem Abgas durch die Metallplatte (120, 420) umfasst,
wobei die mehreren länglichen Schlitze (122, 126, 128, 130, 422, 426, 428, 430) einen ersten länglichen Schlitz (122, 422) umfassen, wobei der erste längliche Schlitz (122, 422) eine erste Tangente (123, 423) entlang einer Position entlang seiner Länge aufweist,
wobei die mehreren länglichen Schlitze (122, 126, 128, 130, 422, 426, 428, 430) einen zweiten länglichen Schlitz (126, 426) umfassen, wobei der zweite längliche Schlitz (126, 426) eine zweite Tangente (127, 427) entlang einer Position entlang seiner Länge aufweist, und
wobei der Winkel zwischen der ersten Tangente (123, 423) und der zweiten Tangente (127, 427) zwischen 45° und 135°, vorzugsweise zwischen 75° und 105° liegt.

2. Gasbefeuerter Strahlungsemitter (100, 400) nach Anspruch 1, wobei zumindest ein Teil der länglichen Schlitze (122, 126, 128, 130, 422, 426, 428, 430) aus einer oder mehreren von U-Form (122, 126, 422, 426), L-Form (128, 428) oder einer kontinuierlich gebogenen Form (130, 430) ausgewählt ist.

3. Gasbefeuerter Strahlungsemitter (100, 400) nach einem der vorhergehenden Ansprüche,
wobei zumindest ein Teil der länglichen Schlitze (122, 126, 128, 130, 422, 426, 428, 430) eine solche Form aufweist, dass die Form eine Öffnung aufweist, und
wobei mehrere längliche Schlitze (122, 126, 128, 130, 422, 426, 428, 430) so angeordnet sind, dass die Öffnung der Form eines länglichen Schlitzes von den mehreren länglichen Schlitzen (122, 126, 128, 130, 422, 426, 428, 430) der Öffnung der Form eines unmittelbar angrenzenden länglichen Schlitzes von den mehreren länglichen Schlitzen (122, 126, 128, 130, 422, 426, 428, 430) zugewandt ist.

4. Gasbefeuerter Strahlungsemitter (100, 400) nach einem der vorhergehenden Ansprüche,
wobei die Metallplatte (120, 420) in ihrer Mitte ein Rechteck von mindestens 7 % der Oberfläche des Brennerdecks (110) umfasst, und
wobei der Anteil an offener Fläche des Rechtecks geringer ist als der Durchschnitt des Anteils an offener Fläche der Metallplatte (120, 420) außerhalb des Rechtecks.

5. Gasbefeuerter Strahlungsemitter (100, 400) nach einem der vorhergehenden Ansprüche, wobei die gesamte offene Fläche der länglichen Schlitze (122, 126, 128, 130, 422, 426, 428, 430) der Metallplatte (120, 420) weniger als 12% der Oberfläche der Metallplatte (120, 420) beträgt.

6. Gasbefeuerter Strahlungsemitter (100, 400) nach einem der vorhergehenden Ansprüche, wobei die Fixierung der Metallplatte (120, 420) in den gasbefeuerten Strahlungsemitter derart ist, dass die Metallplatte (120, 420) mit Spiel relativ zu den Fixierungsteilen fixiert ist.

7. Gasbefeuerter Strahlungsemitter (100, 400) nach einem der vorhergehenden Ansprüche, wobei das Brennerdeck (110) eine Keramikbrennerplatte (112) umfasst, die mehrere Bohrungen zur Strömung von Vormischgas umfasst, oder wobei das Brennerdeck (110) Metallfasern oder ein Metalldrahtgeflecht umfasst.

8. Gasbefeuerter Strahlungsemitter (100, 400) nach einem der vorhergehenden Ansprüche,
wobei die Metallplatte (120, 420) in den Strahlungsemitter (100, 400) durch eine oder mehrere Haltestangen (142, 442, 443) festgehalten wird, die oberhalb und/oder unterhalb der und/oder durch die Metallplatte (120, 420) positioniert sind, und
wobei vorzugsweise Enden von der einen oder mehreren Haltestangen (142, 442, 443) durch Schlitze (144, 444) in Halteelementen (146, 446, 447) des Rahmens (148, 448) des Strahlungsemitter (100, 400) positioniert sind.

9. Gasbefeuerter Strahlungsemitter (100, 400) nach Anspruch 8, wobei die eine oder mehrere Haltestangen (142) einen Haken (150) enthalten, wobei der Haken (150) durch Schlitze in der Metallplatte (120) greift, um die Stangen beim Festhalten der Metallplatte (120) in den Strahlungsemitter zu unterstützen.

10. Gasbefeuerter Strahlungsemitter (100, 400) nach Anspruch 8 oder 9, wobei die Metallplatte (120,420) Halteschlitze (154, 155) entlang zwei ihrer Seiten umfasst, wobei die Halteelemente (146, 446) des Rahmens (148, 448) des Strahlungsemitters (100, 400) durch die Halteschlitze (154, 155) der Metallplatte (120, 420) verschoben werden, oder wobei eine oder mehrere Haltestangen (443) durch die Halteschlitze (447) verschoben werden.

11. Gasbefeuerter Strahlungsemitter (100, 400) nach einem der vorhergehenden Ansprüche, wobei das Brennerdeck (110) eine rechteckige Form mit zwei parallelen langen Seiten und zwei parallelen kürzeren Seiten aufweist,
wobei vorzugsweise entlang der langen Seiten offene Flächen zwischen dem Brennerdeck (110) und der Metallplatte (120, 420) so vorgesehen sind, dass Abgas zwischen dem Brennerdeck (110) und der Metallplatte (120, 420) herausströmen kann.

12. Gasbefeuerter Strahlungsemitter (100, 400) nach Anspruch 11, wobei entlang der kurzen Seiten ein Isolierelement (158) zwischen dem Brennerdeck (110) und der Metallplatte (120, 420) positioniert ist.

13. Gasbefeuerter Strahlungsemitter (100, 400) nach Anspruch 11 oder 12, umfassend ein Dichtungselement entlang der kurzen Seiten, so dass kein von dem Brennerdeck (110) erzeugtes Abgas an der kurzen Seite zwischen dem Brennerdeck (110) und der Metallplatte (120, 420) herausströmen kann.

14. Gasbefeuerter Strahlungsemitter (100, 400) nach einem der vorhergehenden Ansprüche,
wobei die Metallplatte (120, 420) eine Sektion mit erhöhter Porosität im Vergleich zu außerhalb dieser Sektion umfasst und
wobei an der Nichtverbrennungsseite der Metallplatte (120, 420) eine Zündvorrichtung oder ein Sensor an der Sektion mit erhöhter Porosität vorgesehen ist.

15. Vorrichtung (300) für die Wärmebehandlung von sich kontinuierlich bewegendem Bandmaterial (360), wobei die Vorrichtung (300) mehrere gasbefeuerte Strahlungsemitter (370) nach einem der vorhergehenden Ansprüche umfasst, wobei die gasbefeuerten Strahlungsemitter (370) für die Wärmebehandlung durch IR-Strahlung des sich kontinuierlich bewegenden Bandmaterials (360) vorgesehen sind.

## Revendications

1. Émetteur rayonnant (100, 400) à gaz, comprenant
- un plateau de brûleur (110) sur lequel est brûlé un gaz de pré-mélange lorsque l'émetteur est utilisé ; et
- une plaque métallique (120, 420) prévue du côté de combustion du plateau de brûleur (110), pour servir d'écran rayonnant ;
dans lequel la plaque métallique (120, 420) est au moins sur une partie de sa surface - et de préférence sur toute sa surface - espacée du plateau de brûleur (110) ;
dans lequel la plaque métallique (120, 420) comprend une pluralité de fentes allongées (122, 126, 128, 130, 422, 426, 428, 430) pour le passage à travers la plaque métallique (120, 420) de gaz d'échappement généré sur le plateau de brûleur (110) ;
dans lequel la pluralité de fentes allongées (122, 126, 128, 130, 422, 426, 428, 430) comprennent une première fente allongée (122, 422), dans lequel la première fente allongée (122, 422) a une première tangente (123, 423) le long d'une position sur sa longueur ;
dans lequel la pluralité de fentes allongées (122, 126, 128, 130, 422, 426, 428, 430) comprennent une deuxième fente allongée (126, 426), dans lequel la deuxième fente allongée (126, 426) a une deuxième tangente (127, 427) le long d'une position sur sa longueur ;
dans lequel l'angle entre la première tangente (123, 423) et la deuxième tangente (127, 427) est compris entre 45° et 135°, de préférence entre 75° et 105°.

2. Émetteur rayonnant (100, 400) à gaz selon la revendication 1, dans lequel au moins une partie des fentes allongées (122, 126, 128, 130, 422, 426, 428, 430) sont choisies parmi une ou plusieurs parmi une forme en U (122, 126, 422, 426), une forme en L (128, 428) ou une forme courbée de façon continue (130, 430).

3. Émetteur rayonnant (100, 400) à gaz selon l'une quelconque des revendications précédentes,
dans lequel au moins une partie des fentes allongées (122, 126, 128, 130, 422, 426, 428, 430) ont une forme telle que la forme présente une ouverture,
dans lequel une pluralité des fentes allongées (122, 126, 128, 130, 422, 426, 428, 430) sont agencées sorte que l'ouverture de la forme d'une fente allongée de la pluralité des fentes allongées (122, 126, 128, 130, 422, 426, 428, 430) soit tournée vers l'ouverture de la forme d'une fente allongée immédiatement voisine de la pluralité des fentes allongées (122, 126, 128, 130, 422, 426, 428, 430).

4. Émetteur rayonnant (100, 400) à gaz selon l'une quelconque des revendications précédentes,
dans lequel la plaque métallique (120, 420) comprend en son centre un rectangle d'au moins 7 % de la surface du plateau de brûleur (110),
dans lequel le pourcentage de superficie ouverte du rectangle est inférieur à la moyenne du pourcentage de superficie ouverte de la plaque métallique (120, 420) à l'extérieur du rectangle.

5. Émetteur rayonnant (100, 400) à gaz selon l'une quelconque des revendications précédentes, dans lequel la superficie ouverte totale des fentes allongées (122, 126, 128, 130, 422, 426, 428, 430) de la plaque métallique (120, 420) est inférieure à 12 % de la surface de la plaque métallique (120, 420).

6. Émetteur rayonnant (100, 400) à gaz selon l'une quelconque des revendications précédentes, dans lequel la fixation de la plaque métallique (120, 420) dans l'émetteur rayonnant à gaz est telle que la plaque métallique (120, 420) est fixée avec du jeu par rapport aux parties de fixation.

7. Émetteur rayonnant (100, 400) à gaz selon l'une quelconque des revendications précédentes, dans lequel le plateau de brûleur (110) comprend une plaque de brûleur en céramique (112) comprenant une pluralité de perforations pour l'écoulement d'un gaz de pré-mélange ; ou dans lequel le plateau de brûleur (110) comprend des fibres métalliques ou un treillis métallique.

8. Émetteur rayonnant (100, 400) à gaz selon l'une quelconque des revendications précédentes, dans lequel la plaque métallique (120, 420) est retenue dans l'émetteur rayonnant (100, 400) par une ou plusieurs barres de retenue (142, 442, 443) positionnées sur et/ou sous et/ou à travers la plaque métallique (120, 420) ;
de préférence dans lequel des extrémités des une ou plusieurs barres de retenue (142, 442, 443) sont positionnées à travers des fentes (144, 444) dans des éléments de retenue (146, 446, 447) du cadre (148, 448) de l'émetteur rayonnant (100, 400).

9. Émetteur rayonnant à gaz (100) selon la revendication 8, dans lequel les une ou plusieurs barres de retenue (142) contiennent un crochet (150), dans lequel le crochet (150) s'agrippe à travers des fentes dans la plaque métallique (120) pour supporter les barres en retenant la plaque métallique (120) dans l'émetteur rayonnant.

10. Émetteur rayonnant (100, 400) à gaz selon les revendications 8 ou 9 ; dans lequel la plaque métallique (120, 420) comprend des fentes de retenue (154, 155) le long de deux de ses côtés, dans lequel les éléments de retenue (146, 446) du cadre (148, 448) de l'émetteur rayonnant (100, 400) sont glissés à travers les fentes de retenue (154, 155) de la plaque métallique (120, 420) ; ou dans lequel une ou plusieurs barres de retenue (443) sont glissées à travers les fentes de retenue (447).

11. Émetteur rayonnant (100, 400) à gaz selon l'une quelconque des revendications précédentes, dans lequel le plateau de brûleur (110) a une forme rectangulaire avec deux côtés longs parallèles et deux côtés courts parallèles ; de préférence dans lequel, le long des côtés longs, des superficies ouvertes sont prévues entre le plateau de brûleur (110) et la plaque métallique (120, 420), de sorte qu'un gaz d'échappement puisse sortir entre le plateau de brûleur (110) et la plaque métallique (120, 420).

12. Émetteur rayonnant (100, 400) à gaz selon la revendication 11, dans lequel, le long des côtés courts, un élément isolant (158) est positionné entre le plateau de brûleur (110) et la plaque métallique (120, 420).

13. Émetteur rayonnant (100, 400) à gaz selon les revendications 11 ou 12, comprenant un élément d'étanchéité le long des côtés courts de sorte qu'aucun gaz d'échappement produit par le plateau de brûleur (110) ne puisse sortir sur le côté court entre le plateau de brûleur (110) et la plaque métallique (120, 420).

14. Émetteur rayonnant (100, 400) à gaz selon l'une quelconque des revendications précédentes ;
dans lequel la plaque métallique (120, 420) comprend une section avec une porosité accrue par rapport à l'extérieur de cette section ;
dans lequel, du côté de non combustion de la plaque métallique (120, 420), un dispositif d'allumage ou un capteur est prévu au niveau de la section présentant une porosité accrue.

15. Appareil (300) pour le traitement thermique d'un matériau en bande en mouvement continu (360), dans lequel l'appareil (300) comprend une pluralité d'émetteurs rayonnants à gaz (370) selon l'une quelconque des revendications précédentes, dans lequel les émetteurs rayonnants à gaz (370) sont prévus pour le traitement thermique par rayonnement IR du matériau en bande en mouvement continu (360).
